**Europäisches Patentamt**

**European Patent Office**

**Office européen des brevets**

(19)

(11) Veröffentlichungsnummer : **0 408 899 B1**

(12)

# EUROPÄISCHE PATENTSCHRIFT

(45) Veröffentlichungstag der Patentschrift :
**04.11.92 Patentblatt 92/45**

(51) Int. Cl.⁵ : **B60T 8/00, B60K 28/16**

(21) Anmeldenummer : **90111296.1**

(22) Anmeldetag : **15.06.90**

(54) **Antriebsschlupfregelsystem.**

(30) Priorität : **23.06.89 DE 3920608**

(43) Veröffentlichungstag der Anmeldung :
**23.01.91 Patentblatt 91/04**

(45) Bekanntmachung des Hinweises auf die
Patenterteilung :
**04.11.92 Patentblatt 92/45**

(84) Benannte Vertragsstaaten :
**DE FR GB IT SE**

(56) Entgegenhaltungen :
**EP-A- 0 254 943**

(56) Entgegenhaltungen :
**EP-A- 0 305 950**
**EP-A- 0 349 254**
**DE-A- 3 708 063**
**DE-A- 3 737 970**

(73) Patentinhaber : **AUDI AG**
**Auto-Union-Strasse 1 Postfach 220**
**W-8070 Ingolstadt (DE)**

(72) Erfinder : **Sterler, Georg**
**Mozartstrasse 20**
**W-8071 Grossmehring (DE)**

(74) Vertreter : **Le Vrang, Klaus**
**AUDI AG Postfach 220 Patentabteilung I/EQP**
**W-8070 Ingolstadt (DE)**

Jouve, 18, rue Saint-Denis, 75001 PARIS

## Beschreibung

Die Erfindung betrifft eine Vorrichtung zur Verhinderung des einseitigen Durchdrehens eines Rades an einer Antriebsachse mit Differentialgetriebe eines Kraftfahrzeugs nach dem Oberbegriff des Anspruchs 1, z.B. gemäß DE-A-3 737 970.

Solche Vorrichtungen haben eine sogenannte Quersperrenfunktion und dienen je nach Auslegung als Anfahrhilfe oder als Antriebsschlupfregelung für den Fahrbetrieb oder als Kombination beider Möglichkeiten.

Bei einer bekannten Vorrichtung wird das Durchdrehen eines angetriebenen Rades in dessen Antriebsrichtung mit Hilfe von Sensoren erkannt und erfaßt. Um das Durchdrehen in Antriebsrichtung zu unterbinden, wird dieses Rad mit Hilfe der zugehörigen Bremse abgebremst, wozu über eine Steuerleitung und ein steuerbares Hydraulikventil ein Bremsdruck in der zugehörigen Bremsleitung solange aufgebaut wird, bis das Rad in Antriebsrichtung nicht mehr durchdreht.

Diese Vorrichtung dient in einer ersten Funktion als Anfahrhilfe. Bekanntlich sind die beiden Räder einer Antriebsachse zum Ausgleich unterschiedlicher gefahrener Wege über ein Ausgleichsgetriebe oder Differentialgetriebe miteinander verbunden. Wenn ein Rad auf einem glatten Untergrund steht und durchdreht wird auf das andere Rad praktisch kein Drehmoment mehr übertragen, so daß mit dem Fahrzeug nicht angefahren werden kann. Wenn mit Hilfe der Vorrichtung nun das durchdrehende Rad gebremst wird, wirkt dies ähnlich wie eine Differentialsperre und es kann Drehmoment auf das stehende Rad übertragen werden. Dadurch kann in vielen Fällen mit dem Fahrzeug angefahren werden.

In einer zweiten Funktion arbeitet die Vorrichtung im Fahrbetrieb, d.h. wenn das Fahrzeug bereits rollt, als Antischlupfregelung zur Erhöhung der Fahrstabilität. Auch während des Fahrbetriebs wird ein in Antriebsrichtung durchdrehendes Rad über Sensoren erkannt und durch einen Bremseingriff auf einen unkritischen Wert ohne Schlupf abgebremst. Ersichtlich muß die Vorrichtung somit auf jedes angetriebene Rad einzeln wirken können.

Bei einer Fehlfunktion in der Steuerung besteht die Gefahr, daß unerwartet einseitig ein Rad abgebremst wird. Dadurch würde ein Fahrzeug besonders bei höheren Geschwindigkeiten unbeherrschbar werden. Um eine solche Gefahr weitestgehend auszuschließen, ist ersichtlich ein hoher Aufwand an Sicherheitseinrichtungen und redundanten Elementen erforderlich.

Weiter ist eine Antriebsschlupfregelung für den Fahrbetrieb eines Kraftfahrzeugs (d.h. ohne Anfahrhilfe durch einen einseitigen Bremseingriff) zur Erhöhung der Fahrstabilität bekannt. Dabei wird ein im Fahrbetrieb in Antriebsrichtung durchdrehendes, angetriebenes Rad erkannt und über ein Schließen der Drosselklappe das Motorüberschußmoment abgebaut. Damit eine solche Anordnung befriedigend funktioniert, ist eine sehr schnell arbeitende Drosselklappe mit Schließzeiten im Bereich von 30 ms erforderlich. Eine solche Vorrichtung führt auch bei Störungen in der Steuerung zu keinen unbeherrschbaren Fahrzuständen, da im ungünstigsten Fall nur die Motorleistung für längere Zeit zurückgenommen wird.

Eine weitere, bekannte Vorrichtung enthält einen einseitigen Bremseingriff als Anfahrhilfe, wobei auch im Fahrbetrieb bei kleinen Geschwindigkeiten eine Antriebsschlupfregelung über einen Bremseingriff durchgeführt wird. Oberhalb eines bestimmten Geschwindigkeitswertes ist dagegen die Funktion des Bremseingriffs für die Antriebsschlupfregelung ausgeschaltet. In diesem höheren Geschwindigkeitsbereich erfolgt die Antriebsschlupfregelung über eine automatische Drosselklappensteuerung durch Abbau des Motorüberschußmoments, wie im Zusammenhang mit der zweiten bekannten Vorrichtung erläutert. Bei einer Fehlfunktion in der Steuereinrichtung besteht im unteren Geschwindigkeitsbereich die Gefahr einer willkürlichen, einseitigen Bremsung. Da die Umschaltung in Abhängigkeit einer bestimmten Geschwindigkeit von der Funktion mit Bremseingriff auf die Drosselklappensteuerfunktion ebenfalls durch die Steuereinrichtung erfolgt, sind auch hier Fehler möglich, so daß auch bei höheren Geschwindigkeiten die Gefahr einer einseitigen Bremsung mit unbeherrschbaren Fahrzuständen entstehen kann. Somit sind auch bei dieser Vorrichtung aufwendige und teuere Sicherheitseinrichtungen erforderlich.

Bekannte Sicherheitsvorrichtungen bestehen aus zwei Prozessoren in einer Steuerelektronik, die sich gegenseitig überwachen und kontrollieren. Ein Restrisiko durch an sich bekannte Störeinflüsse, wie elektromagnetische Störfelder, ein sich Verlaufen eines Prozessors, etc. bleibt aber auch hier erhalten.

Als Alternative zu einem einseitigen Bremseingriff ist auch eine lamellenbetätigte Sperre am Differentialgetriebe bei einer angetriebenen Frontachse bekannt. Eine solche Sperre ist im Vergleich zu der Lösung mit einem einseitigen Bremseingriff erheblich, ca. um einen Faktor 10, teuerer. Da bei einer Fehlfunktion und dadurch eingelegter Sperre lediglich der Wegausgleich der Antriebsräder nicht mehr stattfindet, das Fahrzeug insgesamt aber noch relativ gut beherrschbar bleibt, wird von einigen Fahrzeugherstellern die teuere lamellenbetätigte Sperre der risikoreicheren Lösung mit dem einseitigen Bremseingriff vorgezogen. Bei hohen Geschwindigkeiten besteht aber auch hier eine erhebliche Gefahr, wenn sich durch eine Fehlfunktion eine eingelegte Sperre willkürlich schließt oder nicht löst.

Aufgabe der Erfindung ist es demgegenüber, eine gattungsgemäße Vorrichtung zur Verhinderung des einseitigen Durchdrehens eines Rades an einer Antriebsachse mit Differentialgetriebe eines Kraftfahrzeugs sicherer für den Fahrbetrieb zu gestalten.

Diese Aufgabe wird mit den kennzeichnenden Merkmalen des Anspruchs 1 gelöst.

Nach Anspruch 1 enthält die Vorrichtung eine Sensoreinheit zur Erkennung des Durchdrehens eines Antriebsrads und eine nachgeschaltete, elektronische Verarbeitungs- und Steuereinheit. An diese Verarbeitungs- und Steuereinheit ist ein Stellelement angeschlossen, mit dem das Abbremsen oder Blockieren eines drehenden Teils der Antriebsanordnung durchführbar ist. Dieses drehende Teil kann entweder ein durchdrehendes Rad oder ein drehendes Teil im Differentialgetriebe sein. Wesentlich ist, daß ein Quersperreffekt an den Antriebsrädern auftritt. Das Stellelement ist über eine elektrische Steuerleitung in einem Stellelementstromkreis mit der Verarbeitungsund Steuereinheit verbunden.

Erfindungsgemäß ist in dieser Steuerleitung bzw. im Stellelementstromkreis ein mechanisch betätigbarer Schalter angeordnet, der in Abhängigkeit der Motorgetriebestellung betätigbar ist und der bei eingelegten, höheren Getriebegängen oder Fahrstufen offen ist.

Damit wird vorteilhaft erreicht, daß über einen mechanisch betätigten Schalter eine mechanische Sicherung und mechanische Redundanz unmittelbar vor dem Stellelement dadurch geschaffen ist, daß bei höheren, kritischen Geschwindigkeiten, die lediglich mit höheren Getriebegängen und Fahrstufen erreichbar sind, der Quersperreffekt über die Steuerleitung nicht aktiviert werden kann. Diese mechanische Sicherung wirkt in jedem Fall, auch wenn durch Fehlfunktionen in der Elektronik Steuerimpulse an das Stellelement abgegeben werden. Unbeherrschbare Fahrzustände bei höheren Geschwindigkeiten durch einen unerwarteten, einseitigen Bremseingriff sind damit ausgeschlossen und die Sicherheit der Vorrichtung ist insgesamt erhöht. Die erfindungsgemäße mechanische Sicherheitseinrichtung funktioniert insbesondere auch dann, wenn die in der Elektronik vorgesehenen Sicherheitsschaltungen und Redundanzen fehlerhaft arbeiten.

Es wird nochmals ausdrücklich darauf hingewiesen, daß die Schaffung einer Möglichkeit für eine einseitige Bremsung am Fahrzeug ein außerordentlich riskantes, sicherheitstechnisches Problem darstellt und daß mit der vorliegenden Erfindung für die Beherrschung dieses Problems eine sehr einfache und äußerst wirksame Lösung gefunden wurde.

Mit Anspruch 2 wird vorgeschlagen, den Schalter in Abhängigkeit des ersten Gangs bzw. der ersten Fahrstufe zu schließen und in allen übrigen Gängen und Fahrstufen zu öffnen. Dadurch ist sichergestellt, daß ein einseitiger Bremseingriff oder eine andere Sperrwirkung bei Störungen, wenn überhaupt, nur bei den sehr geringen Geschwindigkeiten des ersten Gangs und der ersten Fahrstufe erfolgen kann, wo noch keine allzu gefährlichen und unbeherrschbaren Fahrzustände auftreten können.

Bei der Verwendung eines handbetätigbaren Schaltgetriebes nach Anspruch 3 ist es vorteilhaft, den Schalter direkt über ein verstellbares Teil des Schaltgetriebes zu betätigen, wodurch eine sichere Betätigung gewährleistet ist.

Bei Verwendung eines Automatikgetriebes mit einem hydraulischen Wandler gemäß Anspruch 4 wird vorgeschlagen, den Sicherheitsschalter durch wenigstens einen Druckschalter im Hydraulikbereich zu realisieren. Bekanntlich sind die am Automatikgetriebe eingestellten Schaltstufen dadurch erkennbar, daß in einem bestimmten Hydraulikbereich ein bestimmter Druck herrscht. Über einen solchen bestimmten Druck kann beispielsweise die eingelegte erste Fahrstufe erkannt und der Druckschalter betätigt werden. Bei einer anderen Ausführung eines Automatikgetriebes kann die eingelegte erste Fahrstufe dadurch erkannt werden, daß in einem Hydraulikbereich ein bestimmter Druck herrscht und in einem anderen Hydraulikbereich kein Druck aufgebaut wird. Auch ein solcher Zustand läßt sich einfach durch zwei Druckschalter in den jeweiligen Bereichen erfassen, wobei der Sicherheitsschalter durch eine Hintereinanderschaltung dieser Druckschalter, z.B. ein Schließer und ein Öffner, realisierbar ist.

Bei hochwertigeren Kraftfahrzeugen wird die Ausrüstung mit einem Antiblockiersystem immer mehr zum Standard. Bei einem Antiblockiersystem sind Sensoren und eine Verarbeitungs- und Steuereinheit vorhanden, mit denen das Blockieren eines oder mehrerer Räder im Vergleich zu anderen Rädern erkannt wird. Diese ohnehin vorhandenen Einheiten können mit geringen Modifikationen auch dazu verwendet werden, ein einseitiges Durchdrehen eines Antriebsrads bzw. einen Antriebsschlupf im Fahrbetrieb zu ermitteln. Mit Anspruch 5 wird daher vorgeschlagen, die erfindungsgemäße Vorrichtung in Verbindung mit einem Antiblockiersystem aufzubauen und soweit möglich, in dieses zu integrieren.

Nach Anspruch 6 umfaßt die Vorrichtung eine lamellenbetätigte Sperre als Differentialsperre, die von dem Stellelement, z.B. einem Elektromagneten oder einem Elektromotor, betätigt wird. Durch den erfindungsgemäßen, schaltstufenabhängig gesteuerten Schalter in der Steuerleitung zum Stellelement kann die Differentialsperre allenfalls bei einer geringen Fahrgeschwindigkeit, z.B. entsprechend der ersten Schaltstufe, eingreifen, wo auch bei einem Frontantrieb noch keine kritischen und gefährlichen Fahrzustände auftreten können.

In Anspruch 7 wirkt die Vorrichtung mit einer Quersperrenfunktion über einen Bremseingriff. Dazu sind als Stellelemente den angetriebenen Rädern zugeordnete Magnetventile vorgesehen, die in den jeweiligen Bremsleitungen angeordnet und mit einer Druckquelle verbunden sind. Bei einem einseitig durchdrehenden Rad wird über die Ansteuerelektronik ein Steuerimpuls an das zugeordnete Magnetventil abgegeben, wodurch dieses die Bremsleitung zum Hauptbremszylinder hin absperrt und von der Druckquelle einen Druck auf die zugeordnete Bremse aufbringt. Bei der Anbringung des erfindungsgemäßen Schalters in der Steuerleitung zu den Magnetventilen, d.h. im Stellelementstromkreis, kann die sicherheitsrelevante Quersperrenfunktion nur bei den niedrigen Geschwindigkeiten, z.B. der ersten Fahrstufe, auftreten, wo das Fahrzeug auch bei Fehlfunktionen noch keine allzu gefährlichen Reaktionen zeigt.

Eine besonders bevorzugte Ausführung ergibt sich dadurch, daß die vorstehende Ausführungsform einer Quersperrenfunktion mit Bremseingriff in der ersten Fahrstufe und einer Sicherung über den erfindungsgemäßen, mechanisch betätigbaren Schalter durch eine Antriebsschlupfregelung gemäß Anspruch 8 ergänzt wird. Die dort vorgeschlagene Antriebsschlupfregelung arbeitet über eine schnelle Drosselklappensteuerung, die bei einem Antriebsschlupf schnell ein Motorüberschußmoment abbaut. Wie bereits eingangs erläutert, ist eine solche Antriebsschlupfregelung durch das verwendete Prinzip sicherheitstechnisch unkritisch. Eine Anfahrhilfe, die mit einer solchen Antriebsschlupfregelung nicht realisierbar ist, wird durch den Bremseingriff nach Anspruch 7 realisiert, der aber für höhere Geschwindigkeiten sicher unterbunden wird.

Anhand eines Ausführungsbeispiels wird die Erfindung mit weiteren Einzelheiten, Merkmalen und Vorteilen näher erläutert.

Die einzige Fig. zeigt eine schematische Darstellung der hydraulischen und elektrischen Schaltung einer Vorrichtung zur Verhinderung des einseitigen Durchdrehens eines Rades an einer Anriebsachse mit Differentialgetriebe eines Kraftfahrzeugs.

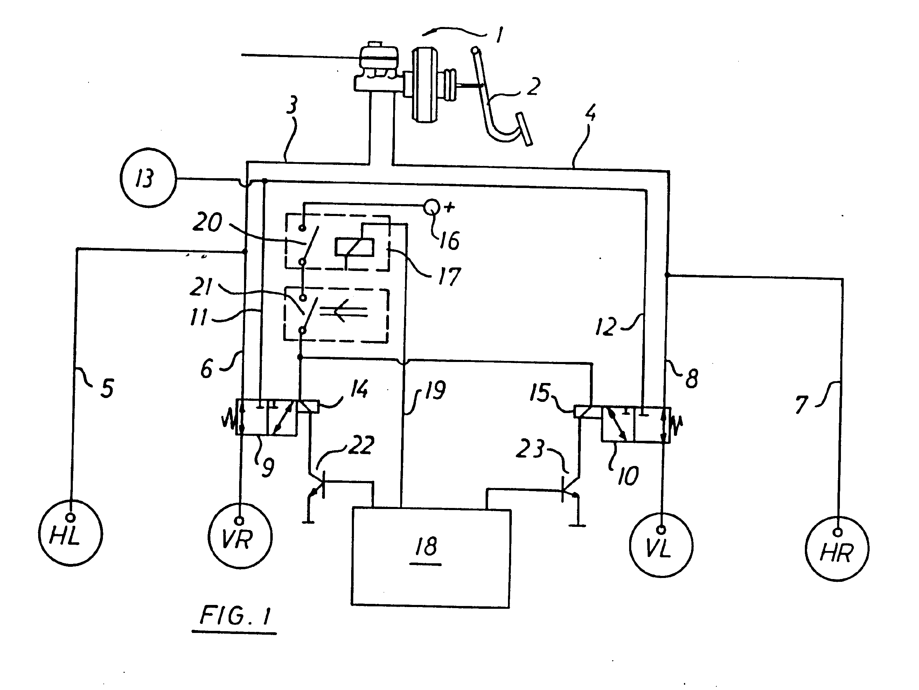

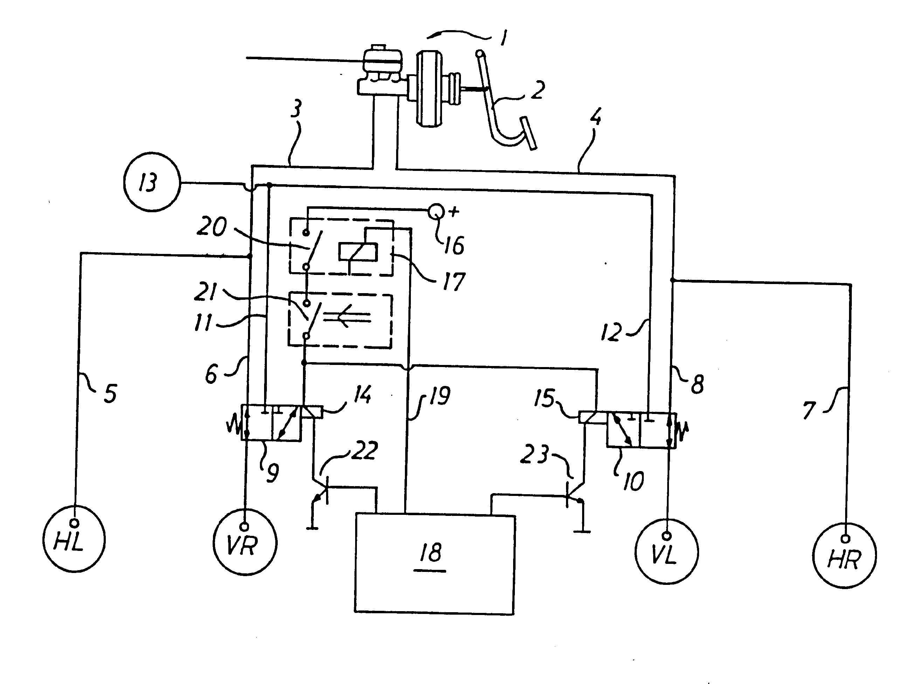

In Fig. 1 ist ein Hauptbremszylinder 1 mit einem Bremspedal 2 dargestellt, von dem zwei hydraulische Bremsleitungen 3, 4 zu einem Diagonalbremssystem eines Fahrzeugs abgehen. Die Bremsleitung 3 verzweigt sich in eine Bremsleitung 5 zum Bremszylinder am hinteren linken Rad und zu einer Bremsleitung 6 zum Bremszylinder eines vorderen rechten Rads. Entsprechend verzweigt sich die Bremsleitung 4 in eine Bremsleitung 7 zu einem Bremszylinder am hinteren rechten Rad und zu einer Bremsleitung 8 zu einem Bremszylinder am vorderen linken Rad.

Es soll sich hier um ein frontgetriebenes Fahrzeug handeln, so daß bei ungünstigen Anfahrtverhältnissen entweder das vordere rechte oder das vordere linke Rad wegen des Differentialgetriebes durchdrehen können. Zur Realisierung einer Quersperrenfunktion, bei der diese unerwünschte Wirkung des Differentialgetriebes ausgeschaltet wird, kann das durchdrehende Rad gebremst werden. Dazu sind in den Bremsleitungen 6 und 8 zu den angetriebenen Vorderrädern jeweils Magnetventile 9 und 10 angeordnet. Diese Magnetventile 9 und 10 sind im gezeichneten Zustand unbetätigt und bilden lediglich einen ungehinderten Durchgang für die Bremsleitungen 6 und 8. In diesem Zustand wirkt die Bremskraft des Fahrers auf das Pedal 2 entsprechend der Bremsaufteilung in üblicher Weise auf alle vier Bremszylinder.

Bei einer Ansteuerung eines der Ventile 9 oder 10 sperrt das angesteuerte Ventil die zugeordnete Bremsleitung zum Hauptbremszylinder und schaltet einen Weg zu einer weiteren Hydraulikleitung 11 bzw. 12. Die Hydraulikleitungen 11 und 12 sind mit einer Druckquelle 13 verbunden. Diese Druckquelle 13 ist beispielsweise bei einem Antiblockiersystem ohnehin vorhanden und kann auch für die vorliegenden Zwecke verwendet werden.

Nach einer Umschaltung eines der Ventile 9 oder 10 wird somit automatisch Druck aus der Druckquelle 13 auf den zugeordneten Bremszylinder geführt und das entsprechende Rad automatisch abgebremst. Dadurch kann ein Drehmoment auf das andere Antriebsrad zum Anfahren aufgebracht werden.

Die Ventile 9 bzw. 10 werden durch Elektromagneten 14 bzw. 15 gesteuert. Am Punkt 16 ist schematisch der Batterieanschluß (+) eingezeichnet, von dem eine elektrische Leitung zu einem sogenannten Ventilrelais 17 führt. Dieses Ventilrelais 17 wird von der Elektronik 18 eines Antiblockiersystems über eine elektrische Leitung 19 angesteuert. Im Betrieb ist das Ventilrelais 17 ständig angesteuert und dessen Schalter 20 betriebsmäßig ständig geschlossen. Nur wenn die Elektronik 18 in sich selbst einen Fehler erkennt, wird das Ventilrelais 17 so angesteuert, daß es stromlos wird und der Schalter 20 öffnet.

Wegen der in einem Antiblockiersystem ohnehin vorhandenen Sensoren, Vergleicher- und Steuereinheiten zur Erkennung von Blockier- und Schlupfzuständen eines Rades, wird die vorliegende Vorrichtung für einen Bremseingriff als Anfahrhilfe mit Quersperrenfunktion in ein Antiblockiersystem integriert. Das heißt, daß für eine konkrete Ausführung über das Ventilrelais 17 auch die elektrische Ansteuerung zu den bekannten vier Steuerventilen des Antiblockiersystems geführt ist.

Nach dem Ventilrelais 17 liegt in Reihe ein Sicherheitsschalter 21, der mechanisch bei einem eingelegten ersten Gang eines Schaltgetriebes oder bei einer eingeschalteten ersten Fahrstufe eines Automatikgetriebes geschlossen ist. Bei allen anderen Gangstellungen und Schaltstufen ist der Schalter 21 offen. Dabei ist zu erkennen, daß dann der Relaistromkreis zu den Elektromagneten 14 und 15 immer unterbrochen ist, d.h. die Magnetventile 9 und 10 nicht aktivierbar sind.

Wenn eines der angetriebenen Vorderräder einseitig durchdreht, wird dies über die Elektronik 18 ermittelt und über die schematisch dargestellte Transistorschaltung 22 bzw. 23 der entsprechende Stromkreis zu dem Magneten 14 bzw. 15 für den Fall, daß auch der Sicherheitsschalter 21 geschlossen ist, geschlossen. Dadurch wird das entsprechende Magnetventil 9 bzw. 10 geschaltet und das zugeordnete Rad zur Verbesserung des Anfahrverhaltens abgebremst. Die dargestellte Funktion bleibt solange erhalten, bis in eine höhere Fahrstufe geschaltet wird bzw. dadurch der Sicherheitsschalter 21 geöffnet wird.

**Patentansprüche**

1. Vorrichtung zur Verhinderung des einseitigen Durchdrehens eines Rades an einer Antriebsachse mit Differentialgetriebe eines Kraftfahrzeugs,
   mit einer Sensoreinheit zur Erkennung des Durchdrehens eines Antriebsrades,
   mit einer nachgeschalteten, elektronischen Verarbeitungsund Steuereinheit (18),
   mit einem Stellelement (9, 10), über das ein Abbremsen oder Blockieren eines drehenden Teils der Antriebsanordnung durchführbar ist und das über eine elektrische Steuerung in einem Stellelement-Stromkreis ansteuerbar ist,
   dadurch gekennzeichnet,
   daß in der Steuerleitung bzw. im Stellelement-Stromkreis ein mechanisch betätigbarer Schalter (21) liegt, der in Abhängigkeit der Motor-Getriebestellung betätigbar ist und der bei eingelegten, höheren Getriebegängen oder höheren Fahrstufen offen ist.

2. Vorrichtung nach Anspruch 1, dadurch gekennzeichnet, daß der Schalter (21) beim eingelegten ersten und gegebenen falls zweiten Getriebegang oder einer ersten und gegebenenfalls zweiten Fahrstufe geschlossen ist und bei allen übrigen eingelegten Gängen offen ist.

3. Vorrichtung nach Anspruch 1 oder 2, dadurch gekennzeichnet, daß das Motorgetriebe ein handbetätigbares Schaltgetriebe ist und der Schalter (21) direkt über einen mechanischen Verstellweg entsprechend der Stellung eines Teils des Schaltgetriebes betätigt wird.

4. Vorrichtung nach Anspruch 1 oder 2, dadurch gekennzeichnet, daß das Motorgetriebe ein Automatikgetriebe mit einem hydraulischen Wandler ist und der Schalter (21) durch wenigstens einen Druckschalter im Hydraulikbereich realisiert ist.

5. Vorrichtung nach einem der Ansprüche 1 bis 4, dadurch gekennzeichnet, daß die Sensoreinheit und die Verarbeitungsund Steuereinheit (18) in die Schaltung eines Antiblockiersystems integriert sind.

6. Vorrichtung nach einem der Ansprüche 1 bis 5, dadurch gekennzeichnet, daß die Vorrichtung eine lamellenbetätigte Sperre für eine Differentialsperre umfaßt, mit der das Stellelement verbunden ist.

7. Vorrichtung nach einem der Ansprüche 1 bis 5, dadurch gekennzeichnet, daß als Stellelemente wenigstens zwei steuerbare Magnetventile (9, 10) vorgesehen sind, die jeweils in der Bremsleitung (6, 8) für die angetriebenen Räder liegen und mit einer Druckquelle (13) verbunden sind und mit deren Hilfe ein einseitig durchdrehendes Rad durch eine Verbindung des jeweiligen Bremszylinders mit der Druckquelle (13) abbremsbar ist.

8. Vorrichtung nach Anspruch 7, dadurch gekennzeichnet, daß zusätzlich eine Antriebsschlupfregelung für den Fahrbetrieb mit einer schnell arbeitenden Drosselklappensteuerung zum schnellen Abbau eines Motorüberschußmoments vorgesehen ist.

**Claims**

1. A device for preventing one-sided rotation of a wheel on a motor vehicle drive axle with a differential gear, with a sensor unit to recognise the rotation of a drive wheel, with a downstream electronic processing and control unit (18), with a control component (9, 10) by means of which braking or locking of a rotating part of the drive arrangement can be effected, and which can be triggered via an electrical control system in a control component circuit, characterised in that a mechanically actuated switch (21) is located in the control lead or in the control component circuit, which switch can be actuated depending on the engine transmission setting and is open when higher gears or higher drive settings are selected.

2. A device according to Claim 1, characterised in that the switch (21) is closed when first gear and possibly when second gear is selected or when the first and possibly when the second drive setting is selected, and is open when all the remaining gears are selected.

3. A device according to Claim 1 or 2, characterised in that the engine transmission is a manual gearbox and the switch (21) is directly actuated via a mechanical adjusting means corresponding to the setting of a part of the gearbox.

4. A device according to Claim 1 or 2, characterised in that the engine transmission is an automatic transmission with a hydraulic converter and the switch (21) is realised by means of at least one pressure switch in the hydraulic region.

5. A device according to any one of Claims 1 to 4, characterised in that the sensor unit and the processing and control unit (18) are incorporated in the circuit of an anti-lock system.

6. A device according to any one of Claims 1 to 5, characterised in that the device comprises a disc-actuated lock for a differential lock to which the control component is connected.

7. A device according to any one of Claims 1 to 5, characterised in that at least two controllable solenoid valves (9, 10) are provided as control components, which are each located in the brake line (6, 8) for the driven wheels, which are connected to a pressure source (13), and by means of which a wheel rotating on one side can be braked by a connection of the relevant brake cylinder to the pressure source (13).

8. A device according to Claim 7, characterised in that in addition a transmission slip control system is provided for the vehicle operation, with a rapidly operating throttle valve control system for rapidly eliminating an excess of engine torque.

## Revendications

1.- Dispositif pour empêcher le patinage unilatéral d'une roue reliée à un arbre de transmission à différentiel d'un véhicule automobile, comprenant

une unité détectrice pour déceler le patinage d'une roue motrice,

une unité électronique de traitement et de commande (18) intercalée à la suite,

un élément de commande (9, 10), au moyen duquel un freinage ou blocage d'une partie rotative du système d'entraînement peut être effectué et qui peut être excité au moyen d'une commande électrique dans un circuit de l'élément de commande,

caractérisé en ce qu'il est monté, dans la ligne de commande ou le circuit de l'élément de commande, un interrupteur manoeuvrable mécaniquement (21) qui peut être manoeuvré en fonction du rapport de transmission du moteur et qui est ouvert lorsque les rapports de transmission supérieurs ou les crans de marche supérieurs sont enclenchés.

2.- Dispositif selon la revendication 1, caractérisé en ce que l'interrupteur (21) est fermé lorsque le premier et éventuellement le deuxième rapport de transmission ou un premier et éventuellement un deuxième cran de marche sont enclenchés, et en ce qu'il est ouvert lorsque toutes les autres vitesses sont enclenchées.

3.- Dispositif selon la revendication 1 ou 2, caractérisé en ce que la boîte de vitesses du moteur est une boîte à changement de vitesse annuel, et en ce que l'interrupteur (21) est actionné directement sur un trajet de déplacement mécanique correspondant à la position d'un élément de la boîte à changement de vitesse.

4.- Dispositif selon la revendication 1 ou 2, caractérisé en ce que la boîte de vitesses du moteur est une boîte automatique à variateur hydraulique, et en ce que l'interrupteur (21) est réalisé par au moins un interrupteur à pression dans la partie hydraulique.

5.- Dispositif selon l'une quelconque des revendications 1 à 4, caractérisé en ce que l'unité détectrice et l'unité de traitement et de commande (18) sont intégrées dans le circuit d'un système d'antiblocage (ABS).

6.- Dispositif selon l'une quelconque des revendications 1 à 5, caractérisé en ce qu'il comprend un organe de blocage actionné par lamelles pour un verrouillage du différentiel, organe auquel est raccordé l'élément de commande.

7.- Dispositif selon l'une quelconque des revendications 1 à 5, caractérisé en ce qu'il est prévu, comme éléments de commande, au moins deux électrovalves (9, 10) qui sont disposées chacune dans une conduite de frein (6, 8) pour les roues motrices et sont reliées à une source de pression (13), et au moyen desquelles une roue qui patine unilatéralement peut être freinée par le raccordement du cylindre de frein de la roue en question à la source de pression (13).

8.- Dispositif selon la revendication 7, caractérisé en ce qu'il est prèvu en plus un système régulateur de patinage d'entraînement avec une commande à fonctionnement rapide du papillon des gaz pour la diminution rapide d'un couple moteur excessif.

FIG. 1

EP 0 408 899 B1

HR 7 VL 8 10 12 4 2 1 15 23 16 17 18 19 22 14 3 20 21 11 6 9 VR 13 5 HL

8